# EUROPEAN PATENT APPLICATION

(11) **EP 3 096 517 A1**
(43) Date of publication of application: **23.11.2016**
(21) Application number: 15168922.1
(22) Date of filing: 22.05.2015
(51) Int. Cl.: H04N 13/04, H04N 13/00, G02B 27/01

(54) **WEARABLE SMART GLASSES**

(71) Applicant: TP Vision Holding B.V., 1097 JB Amsterdam (NL)
(72) Inventor: Maes, Jurgen Pieter, B-9052 Ghent (BE); Frame, Nicholas Rory, B-9052 Ghent (BE); Styers, Timothy Farrell, B-9052 Ghent (BE); Seurynck, Jense Frans Noël, B-9052 Ghent (BE); Soens, Thomas, B-9052 Ghent (BE); De Meyer, Eline, B-9052 Ghent (BE); Harvengt, Jean-Marc Joel, B-9052 Ghent (BE)
(74) Representative: DREISS Patentanwälte PartG mbB

(57) **Abstract**

The disclosed invention relates to smart glasses (4). The smart glasses comprise a near eye display subsystem (12, 21) for creating a see-through image for a user wearing the smart glasses (4). One or more image elements are made visible in the see-through image, so that the user wearing the smart glasses (4) experiences an image which comprises one or more virtual elements, which are made visible in the see-through image, and real objects in the background.

A sensing subsystem (13, 14) of the smart glasses (4) determines the area occupied by a display screen in the background scene.

The one or more image elements are displayed in the see-through image at a predetermined location with respect to the determined occupied area.

Embodiments of the smart glasses (4) are arranged to display a virtual overlay over the image displayed on the screen in the background, display a window in the background with a defined position with respect to the screen or create the experience of an ambient glow around the screen in the background.

## Description

### FIELD OF THE INVENTION

The invention relates to wearable smart glasses and a system comprising the smart glasses. The invention further relates to a computer program product for use in a programmable wearable device.

### BACKGROUND OF THE INVENTION

Smart glasses allow virtual imagery to be mixed with a user's actual view of the real world. Such smart glasses create a see-through image for the user wearing the smart glasses enabling a user to view the mixed imagery of virtual and real objects. Such a display system overlays virtual imagery in the user's field of view.

Wearable smart glasses are inter alia disclosed in US 20130187835. These smart glasses comprise an outward facing image sensor to acquire an image of the background scene seen by the user through the smart glasses. A gaze detection subsystem is used to determine a location on an external display screen at which the user is gazing. The identity of an object displayed on the external display screen at the location is determined. Contextual information related to the identified object is displayed on the see-through display screen so that the viewer experiences both the identified object and the contextual information in one image.

### SUMMARY OF INVENTION

It is an object of the invention to provide wearable smart glasses with new functionalities enabling new applications of smart glasses.

According to a first aspect of the invention this object is achieved by wearable smart glasses comprising: a near eye display subsystem for creating a see-through image for a user wearing the smart glasses, an image generator arranged to receive information and coupled to the near eye display subsystem so as to display at least one image element in the see-through image corresponding with the information received, a sensing subsystem arranged to determine area information indicative for an area occupied by a display screen in a background scene visible by the user through the see-through image, whereby the image generator is arranged to display the image element in the see-through image on a location based on the area information such that for the user the image element is visible at a defined position with respect to the area occupied by the display screen.

By means of these wearable smart glasses for the user an experience of an overlay or an auxiliary screen at predetermined locations can be created on or around the display screen in the background. With these smart glasses no modifications in the image processing and driver electronics of the display screen are required. So additional functionality can easily be added to the display screen.

Interesting functionalities to be added are the experience of additional subtitling, the experience of an ambient glow around the display screen or the experience of the display of additional information as an overlay display of the image on the screen or as an additional image outside the area occupied by the screen.

It is interesting to include the smart glasses in a system comprising the wearable smart glasses and an information providing part for providing image information and auxiliary information, the information providing part being coupled to the further display screen for displaying images represented by the image information, the information providing part being further coupled to the image generator of the smart glasses to transfer the auxiliary information to the image generator so as to cause the display of image elements corresponding with the auxiliary information in the see-through image.

The application of the information providing part enables that the display of the image information and the display of the auxiliary information can be tuned to each other in a simple manner.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a typical environment for use of the smart glasses according to the invention,
Fig. 2 shows an embodiment of the smart glasses according to the invention,
Fig. 3. shows an example of a background scene which is visible for a user wearing the smart glasses,
Fig. 4 shows an image which is experienced by the user when using an embodiment of the smart glasses which are arranged to make subtitles visible,
Fig. 5 and Fig 6 show images which are experienced by the user when using an embodiment of the smart glasses which is arranged to make an auxiliary screen visible,
Fig. 7 shows an image which is experienced by the user when using an embodiment of the smart glasses which is arranged to make an ambient glow visible around a screen in the background,
Fig. 8 shows an embodiment of a system in which smart glasses according to the invention are used, and
Fig. 9 shows another embodiment of a system in which smart glasses according to the invention are used.

### DETAILED DESCRIPTION OF EMBODIMENTS

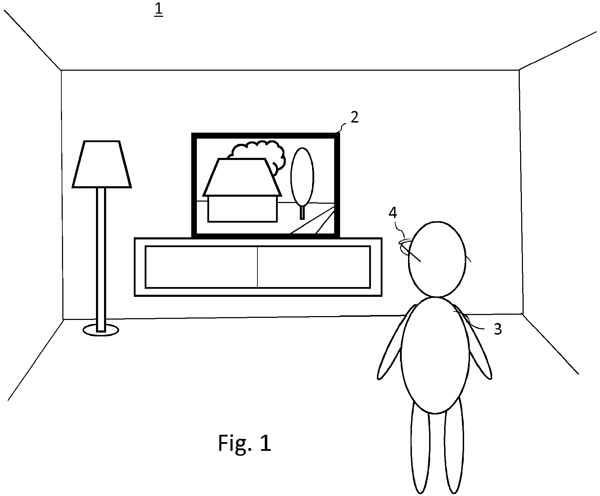

Fig 1. shows an example of a typical environment, e.g. a living room 1, for which smart glasses according to the invention are intended.

A display screen 2, e.g. a TV screen is located against a wall of the room 1. A user 3 is looking through smart glasses 4 at the display screen 2.

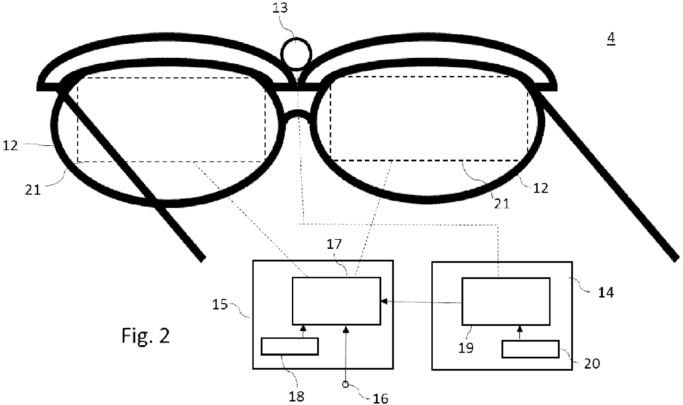

Fig. 2 shows an embodiment of wearable smart glasses 4 according to the invention in more detail. The smart glasses 4 comprise a near eye display subsystem for creating a see-through image for the user wearing the smart glasses 4. Such a near eye display subsystem may comprise a projection system projecting a visible image to the eyes of the user or to lenses. In the embodiment shown in Fig. 2 the near eye subsystem comprises see-through displays 21 (e.g. see-through OLED screens) integrated in lenses 12 of the smart glasses 4.

The smart glasses 4 further comprises a sensing subsystem which determines an area occupied by the display screen 2 (see Fig.1) in a background scene which visible by the user through lenses 12. Determining area information indicative for an area occupied by a display screen may comprise determining area information indicative for an area occupied by a display device comprising the display screen, as frames around display screens can be assumed to be relatively small.

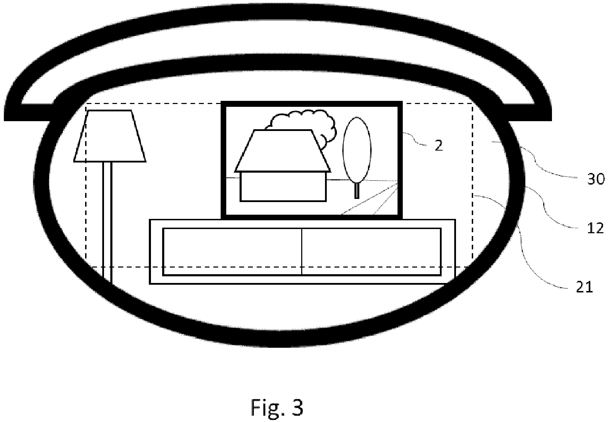

Fig. 3 shows a background scene 30 which is seen by the user 3 through one of the lenses 12 when he is looking to the display screen 2.

In the embodiment shown in Fig. 2 the sensing subsystem comprises a camera 13 with which an image of the background scene is captured and an image analyzer 14 for deriving information about the area which is occupied in the background scene by the display screen 2. The image analyzer 14 makes use of image recognition programs, stored in a program memory 20 and executed by a program controlled processor 19. These programs are arranged for detecting typical shapes, i.e the shapes of display screens, or one or more specific shapes, e.g. of one or more display screen/device models. These programs may have access to a database of typical and/or specific shapes. A user may be able to select one or more specific display screen models that he owns. However the invention is not limited to embodiment which makes use of a camera and image analyzer to determine the area occupied by the display screen. Other sensing subsystems are possible, for example sensing subsystems which determine the occupied area on the basis of the distance between the smart glasses, the orientation of the screen with respect to smart glasses and the dimensions of the screen.

The smart glasses 4 further comprise an image generator 15 arranged to receive information via an input 16 and coupled to the integrated see-through displays 21, so as to enable, if desired, the display of at least one image element in the see-through image corresponding with the information received via the input 16.

The image generator 15 is further arranged to cause a display of the image element in the see-through image such that for the user the image element is visible at a defined location with respect to the area occupied by the display screen 2.

To this end the image generator 15 is provided with a program controlled processor 17 which executes a suitable program available in a program memory 18.

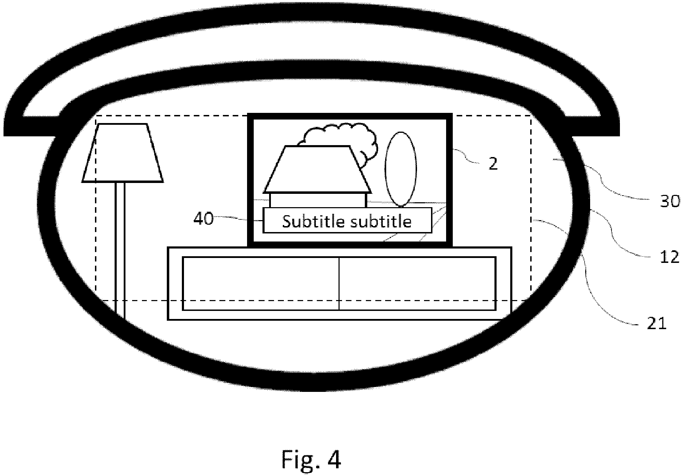

Fig 4 shows the image which is experienced by the user when using an embodiment of the smart glasses which are arranged to make subtitles 40 visible in the see through images rendered in the see-through displays 21 in the lenses 12.

In this embodiment the image generator is adapted to receive subtitle information via the input 16 and to display the subtitle information in the see-through image, displayed on the see-through displays 21, at a display location which is defined by the location of the area occupied by the display screen 2. This information is included in the area information received from the image analyzer 14. The determined display location overlaps with the area occupied in the background scene by the display screen 2, so that the user sees the subtitle information at a suitable location within the image displayed on the display screen 2, e.g. on the lower side of this image.

It will be clear that instead of subtitle information also other information can be overlaid over the image on the display screen 2, e.g. a logo or additions to images which are displayed on the display screen 2.

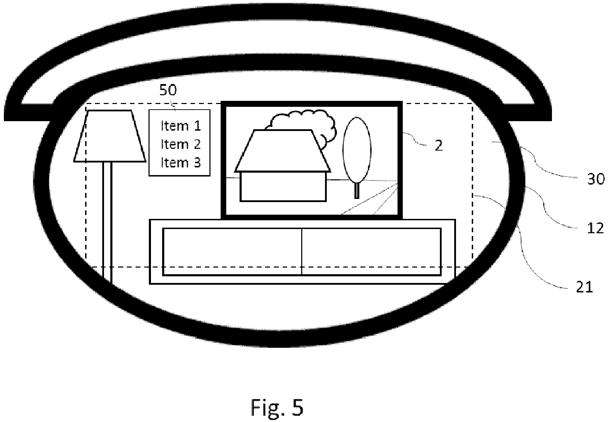

Fig 5. shows the image which is experienced by the user when using an embodiment of the smart glasses which is arranged to make an auxiliary window 50 visible. The location is chosen such that the window 50 is close to the screen 2, but not overlapping or hardly overlapping the area occupied by the display screen 2. This auxiliary window can be used to display User Interface elements or other information such as contextual information related to the image shown on the display screen 2. It will be clear that information which is unrelated to the image (e.g. a weather forecast) or another video program) can be shown on the display screen 2. By displaying the window 50 outside the area occupied by the screen 2 the image on the display screen 2 is not affected so that no important parts of the image on screen are missed.

Although it is preferable that the auxiliary window 50 is displayed without overlap with the image on the display screen 2 it may occur that there is not enough space available in the see-through displays 21 to display the auxiliary window 50 completely separated from the image on the display screen 2.

In order to solve this problem a modified image generator can be used, which determines where in the see-through image there is sufficient space available for a completely separated display, and if such space is not available select a part in the see-through image which only needs a small overlap.

Further it may occur that the user turns his head to another location in the room than where the display screen 2 is located. This may result in that the display screen 2 is not or only for a minor part visible in the background scene 30 seen by the user through the lenses 12 of the smart glasses 4.

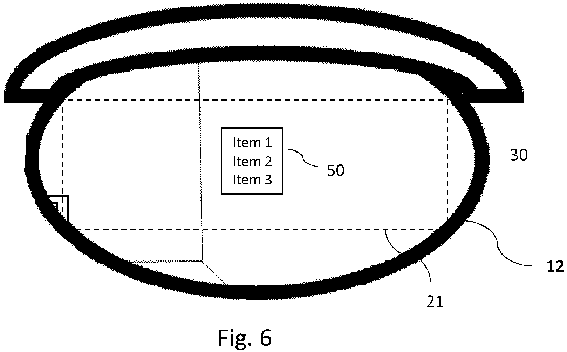

In such a situation it may be advantageous to display the auxiliary screen in the center of the glasses 12 as shown in Fig. 6.

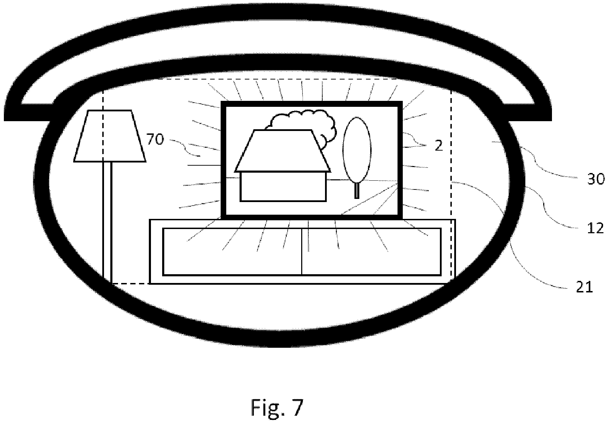

This can be achieved by an embodiment of the smart glasses wherein the image analyzer 14 submits a message to the image generator 15 that it fails to detect a display screen or that only a minor part of the screen 2 is detected. The image generator 15 is arranged to display in response to such a message the auxiliary window 50 in the center of the see-through displays 21.In another embodiment of the smart glasses the image generator 15 is arranged to create an image in the see-through image on the see-through displays 21 that encloses the area occupied by the screen 2, so as to cause an experience of an ambient glow 70 around the screen 2 as shown in Fig. 7.

The color and intensity of the glow can be unrelated to the contents of the image displayed on the display screen 2, but preferably the intensity and color of the glow are related to the contents of the image displayed on screen 2 so as to create an experience of an image that extends to the area around the screen in a similar way as in the so-called Ambilight televisions which are marketed under the Philips trade name. The color and intensity of the ambient glow 70 can be derived from information about the image on the screen 2. In an embodiment, the image generator 15 is arranged to derive the color and intensity information from image information submitted to the image generator 15 in a similar way as is done in the Ambilight televisions. This image information can be submitted via input 16.

In an alternative embodiment the sensing the image information can be derived by means of the camera 13 of the sensing subsystem.

In the embodiments described hereinbefore each of the two lenses 12 is provided with a see-through display 21, so as to create a see-through image for both eyes of the user 3. Embodiments in which a see through image is generated for only one eye are also possible.

In case a see-through image is generated for both eyes this enables a 3D presentation of the see-through image. Then the distance at which the image element is experienced by the user is settable. In some applications, such as the overlay of subtitles or the display of the ambient glow it may be preferable that the image elements are experienced at the same distance as the display screen 2. In case the smart glasses are provided with a detection system to determine the distance between the smart glasses and the screen, the distance at which the 3D elements are experienced can be automatically adapted to the detected distance.

In other embodiments it may be preferable to set the experienced distance of the image elements in front of the screen.

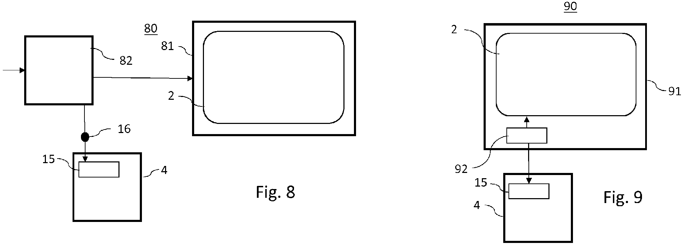

Fig. 8 shows an embodiment of a system 80 according to the invention. The system 80 comprises the smart glasses 4, a display device 81 provided with the display screen 2. The system further comprises an information providing part 82. The information providing part 82 is providing image information, representing content to be displayed on the display screen 2 and auxiliary information representing image elements to displayed by the smart glasses 4. The information providing part 82 is coupled to the display device 81 for providing the image information to it, so as to cause a display of corresponding images on the screen 2. The information providing part 82 is further coupled to the input 16 of the image generator for providing the auxiliary information to the image generator 15 of the smart glasses so as to cause the display of the image element corresponding with the auxiliary information in the see-through image.

In an embodiment of the system the image providing part 82 is a set top box arranged to receive TV signals including auxiliary information, such as a TV-guide , metadata related to a program or subtitle information, etc. The set top box can be equipped to receive the TV programs via cable, satellite or terrestrial channels or via the Internet. Such a set top box can separate the video signal representing the content to be displayed on the screen 2 and the information to be displayed via the smart glasses 4. Fig. 9 shows another embodiment 90 of the system according to the invention. The system 90 comprises a TV apparatus comprising the screen 2 and an image providing part 92. The image proving part makes use of internal TV sub systems for deriving the auxiliary information to be displayed by the smart glasses and is configured to output this auxiliary information to the image generator 15 of the smart glasses 4.

In yet another embodiment the display device receives the image internally or from an external image providing part, and receives the auxiliary information separately, from a different device/part (internal or external to the display device).

Although several embodiments of the present invention have been illustrated in the accompanying drawings and described in the above detailed description, it will be understood that the invention is not limited to the embodiments disclosed, but is capable of numerous modifications without departing from the scope of the invention as set out in the following claims. The invention may be implemented by having a programmable wearable device performing a computer program. Computer program is to be understood to mean any computer program product stored on a computer-readable medium, such as an optical disc, downloadable via a network, such as the Internet, or marketable in any other manner.

## Claims

1. Wearable smart glasses (4) comprising
- a near eye display subsystem (12,21) for creating a see-through image for a user (3) wearing the smart glasses
- an image generator (15) arranged to receive information and coupled to the near eye display subsystem (12, 21) so as to display at least one image element (40; 50; 70) in the see-through image corresponding with the information received,
- a sensing subsystem (13, 14) arranged to determine area information indicative for an area occupied by a display screen (2) in a background scene visible by the user (3) through the see-through image,
whereby the image generator (15) is arranged to display the image element (40; 50; 70) in the see-through image on a location based on the area information such that for the user (3) the image element is visible at a defined position with respect to the area occupied by the display screen (2).

2. Wearable smart glasses (4) as claimed in claim 1, wherein the sensing subsystem comprises a camera (13) arranged to acquire background image information of the background scene and an image analyzer (14) arranged to derive the area information from the acquired background image information.

3. Wearable smart glasses (4) as claimed in claim 1 or 2, whereby the image generator (15) is arranged to cause a predetermined overlap of the at least one image element (40) with the image of the display screen (2) seen by the user in the background scene.

4. Wearable smart glasses (4) as claimed in claim 3, wherein the image generator (15) is arranged to receive subtitle information, wherein the at least one image element (40) comprises subtitles corresponding to the received subtitle information.

5. Wearable smart glasses (4) as claimed in claim 1 or 2, whereby the image generator (15) is arranged to cause a display of the at least one image element (50) in a part of the see-through image which is at least substantially non-overlapping with the occupied area.

6. Wearable smart glasses (4) as claimed in claim 5, whereby the image analyzer (13) is arranged to determine a position of the occupied area in the background scene and whereby the image generator (15) is arranged to select a location for the display of the image element (50) in the see-through image in dependence on the position of the detected position of the occupied area in the background scene.

7. Wearable smart glasses (4) as claimed in claim 5, whereby the image generator is arranged to cause the display of the at least one image element (50) in a central or other predetermined position of the see-through image in response to a signal indicating the absence of display screen in the background scene.

8. Wearable smart glasses (4) as claimed in claim 5, wherein the image generator (15) is arranged to cause a display of an ambient image surrounding the occupied area with an intensity distribution and color distribution which is related to the intensity distribution and color distribution of the image displayed on the display screen (2) so as to create for the user an experience of an ambient glow around the display screen (2).

9. Wearable smart glasses (4) as claimed in any one of claim 1, 2, 3, 4, 5, 6 or 8, arranged to disable the display of image elements in case the sensing subsystem fails to determine the area information.

10. A system (80) comprising the wearable smart glasses (4) as claimed in any one of the preceding claims, the display screen (2) and an information providing part (82) for providing image information and auxiliary information, the information providing part being coupled to the display screen (2) for displaying images represented by the image information, the information providing part being further coupled to the image generator (15) of the smart glasses (4) to transfer the auxiliary information to the image generator (15) so as to cause the display of image elements corresponding to the auxiliary information in the see-through image.

11. System as claimed in claim 9, wherein the information providing part (82) is comprised by a TV program receiver for receiving video information and auxiliary information and arranged to transfer the video information to the display screen (2) so as to cause the display of a sequence of images represented by the video information and to transfer the received auxiliary information to the image generator (15) of the wearable smart glasses (4).

12. Display device for use in the system as claimed in claim 10 or 11, wherein the display device comprises the display screen (2) and the information providing part.

13. Display device as claimed in claim 12, whereby the display device is a TV apparatus.

14. A computer program product enabling a programmable wearable device to become the wearable device of any of claims 1 to 9.
